# EUROPÄISCHE PATENTSCHRIFT

(11) **EP 2 559 609 B1**
(45) Veröffentlichungstag und Bekanntmachung des Hinweises auf die Patenterteilung: **14.05.2014**
(21) Anmeldenummer: 12004097.7
(22) Anmeldetag: 26.05.2012
(51) Int. Cl.: B62D 25/06

(54) **Verstärkungsrahmen und Verfahren zum Anbringen eines Verstärkungsrahmens in einer Fahrzeugkarosserie**
Reinforcement frame and method for applying a reinforcement frame in a vehicle body
Cadre de renfort et procédé de mise en place d'un cadre de renfort dans une carrosserie de véhicule

(30) Priorität: 18.08.2011 DE 102011110910
(43) Veröffentlichungstag der Anmeldung: 20.02.2013
(73) Patentinhaber: Audi AG, 85045 Ingolstadt (DE)
(72) Erfinder: Carle, Klaus-Dieter, 74074 Heilbronn (DE); Bentel, Ingo, 74226 Nordheim (DE)
(74) Vertreter: Mader, Wilfried

(56) Entgegenhaltungen:
- FR-A5- 2 124 997

## Beschreibung

Die Erfindung betrifft einen Verstärkungsrahmen für ein Fahrzeug gemäß dem Oberbegriff des Patentanspruchs 1 und ein korrespondierendes Verfahren zum Anbringen eines solchen Verstärkungsrahmens in einer Fahrzeugkarosserie.

Aus der DE 10 2005 035 807 A1 ist beispielsweise ein Dachmodul zum Einbau in eine Karosserie eines Fahrzeugs bekannt. Das bekannte Dachmodul umfasst eine oder mehrere Scheiben und einen das Dachmodul aufnehmenden Dachmodulrahmen, welcher in eine in einem Dach der Fahrzeugkarosserie vorgesehene Öffnung einsetzbar ist, wobei der Dachmodulrahmen zwei Längsseiten und zwei Stirnseiten aufweist. Im Einbauzustand wird das Dachmodul an drei Seiten über Steckverbindungen mit der Karosserie des Fahrzeugs formschlüssig arretiert und an einer Stirnseite an der Karosserie des Fahrzeugs befestigt.

Aus der FR 2 124 997 A5 ist ein Kraftfahrzeugdach, insbesondere für einen Personenkraftwagen bekannt, an das die Seitenwände über einen Dachrahmen angeschlossen sind. Das Kraftfahrzeugdach ist durch zwei Längssicken, die nach unter ausgeprägt sind, in drei Bahnen unterteilt. Die mittlere Bahn wird von einem Dachbeplankungsblech gebildet, das anschließend an die Längssicken nach unten abgewinkelt ist. Der abgewinkelte Bereich des Dachbeplankungsblechs wird von zwei seitlichen Blechstreifen abgedeckt, die in der Kontur des mittleren Teils des Dachbeplankungsblechs nach außen weiter verlaufen und die in diesem Bereich die Außenhaut des Kraftfahrzeugdaches bilden, das seitlich von einer Regenrinne begrenzt wird. Der außerhalb der Längssicken liegende Teil des Dachbeplankungsblechs bildet mit dem Blechstreifen und einem Falzblech den als Hohlträger gestalteten Dachrahmen. Die Ränder des Dachbeplankungsblechs sind als nach unten abgewinkelte Flansche ausgebildet, an denen das Falzblech durch Schweißen befestigt ist. Die äußeren Ränder der Blechstreifen sind als Flansche nach außen abgewinkelt, an denen das Falzblech angeschweißt ist. Der Rand des Falzblechs steht nach oben über und bildet zusammen mit dem Flansch des Blechstreifens die Regenrinne. Die Blechstreifen sind an ihrem inneren Rand mit einem Flansch versehen, der an den Längssicken des Dachbeplankungsblechs angeschweißt ist und über einen Steg an die Blechstreifen anschließt.

Die Aufgabe der Erfindung besteht darin, einen Verstärkungsrahmen für ein Fahrzeug zur Verfügung zu stellen, welcher bei einfacher und kostengünstiger Konstruktion sowie einer steifen Anbindung an die Karosserie bzw. an eine Tragstruktur des Fahrzeugs die Toleranzanforderungen erfüllt.

Erfindungsgemäß wird die Aufgabe durch Bereitstellung eines Verstärkungsrahmens für ein Fahrzeug mit den Merkmalen des Patentanspruchs 1 und durch ein Verfahren zum Anbringen eines solchen Verstärkungsrahmens in einer Fahrzeugkarosserie gelöst. Vorteilhafte Ausführungsformen und Weiterbildungen der Erfindung sind in den abhängigen Ansprüchen angegeben.

Um einen Verstärkungsrahmen für ein Fahrzeug zu schaffen, welcher bei einfacher und kostengünstiger Konstruktion sowie bei Erfüllung der Toleranzanforderungen eine steife Anbindung an eine Dachstruktur ermöglicht, wird erfindungsgemäß vorgeschlagen, dass der Verstärkungsrahmen für ein Fahrzeug zwei Rahmenteile umfasst, wobei ein erstes Rahmenteil einen ersten Flansch in vertikaler Richtung und das zweite Rahmenteil einen zweiten Flansch in vertikaler Richtung ausbilden, wobei die beiden Flansche miteinander verbunden sind. Hieraus ergibt sich ein verwindungssteifes und dennoch leichtes Bauteil, welches dem Verstärkungsrahmen in vorteilhafter Weise eine extreme Belastbarkeit in unterschiedlichen Richtungen verleiht. Somit kann auf einfache und kostengünstige Weise ein Verstärkungsrahmen für die Aufnahme eines Dachmoduls hergestellt werden, welcher zudem ein geringes Bauteilgewicht und eine geringe Bauteiltiefe aufweist.

Hierbei ist das erste Teil des Verstärkungsrahmens fest mit dem Dachrahmen verbunden. Dadurch wird auf einfache Weise sowohl eine steife Anbindung des Verstärkungsrahmen an den Dachrahmen der Fahrzeugkarosserie als auch einen Ausgleich von Toleranzen in vertikaler Richtung ermöglicht.

Zudem ist das zweite Rahmenteil mit einer Dachaußenhaut der Fahrzeugkarosserie verbunden. In vorteilhafter Weise kann das zweite Rahmenteil des Verstärkungsrahmens formschlüssig mit der Dachaußenhaut der Fahrzeugkarosserie verbunden werden und auf diese Weise die Stabilität sowohl des Verstärkungsrahmens als auch der gesamten Dachstruktur der Fahrzeugkarosserie erhöhen. Zusätzlich verdeckt die Dachaußenhaut den konstruktiven Aufbau des Verstärkungsrahmens und wirkt somit als Sichtblende.

In vorteilhafter Ausgestaltung des erfindungsgemäßen Verstärkungsrahmens bilden der erste Flansch und der zweite Flansch einen um das Dachmodul umlaufenden Ring. Hierdurch entsteht eine rundum stabile tragende Dachstruktur, welche auf Grund der versteifenden Wirkung der verbundenen Flansche des Verstärkungsrahmens besonders belastbar ist. Somit kann durch Ausführungsformen des erfindungsgemäßen Verstärkungsrahmens eine Erhöhung der Verwindungssteifigkeit der gesamten Dachstruktur der Karosserie des Fahrzeugs realisiert und somit auch die Sicherheit der Fahrzeuginsassen in der Fahrgastzelle erhöht werden.

In weiterer vorteilhafter Ausgestaltung des erfindungsgemäßen Verstärkungsrahmens kann der erste Flansch großflächig den zweiten Flansch berühren, wodurch bei der Montage des Verstärkungsrahmens ein Toleranzausgleich in vertikaler Richtung ermöglicht wird. Dadurch kann der Montageprozess wesentlich erleichtert werden, da vertikale Toleranzabweichungen bei der Montage des Verstärkungsrahmens durch die sich vertikal überlappenden Flansche der beiden Rahmenteile kompensiert werden können. Zudem kann sich ein besonders stabiler bzw. belastbarer T-förmiger Fügebereich ergeben, der einfach und kostengünstig herstellbar ist. Durch die beschriebene Anordnung der beiden Rahmenteile ist der Zugang beim Fügen nicht gestört. Vorzugsweise die beiden Rahmenteile stoffschlüssig und/oder formschlüssig miteinander verbunden werden. Ein zusätzliches Befestigungsmittel kann somit entfallen. Damit ist es möglich den Verstärkungsrahmen ohne großen technischen Aufwand zeitsparend in die Dachstruktur der Karosserie einzubauen, wodurch die Montagezeiten und somit die Herstellungskosten reduziert werden können. Des Weiteren sind die verwindungssteif ausgebildeten Rahmenteile des Verstärkungsrahmens besonders montagefreundlich und können dadurch definiert positioniert und fixiert werden, wodurch eine qualitativ hochwertige und belastbare Verbindung hergestellt werden kann.

Ausführungsformen des erfindungsgemäßen Verfahrens zum Anbringen eines erfindungsgemäßen Verstärkungsrahmens in einer Fahrzeugkarosserie verbinden zuerst das erste Teil des Verstärkungsrahmens mit dem Dachrahmen und das zweite Teil des Verstärkungsrahmens mit der Dachaußenhaut. Dann wird das zweite Teil des Verstärkungsrahmens mit der Dachaußenhaut und dem zweiten Flansch so positioniert, dass die Dachaußenhaut am Dachrahmen und der zweite Flansch am ersten Flansch anliegen. Dann wird der erste Flansch mit dem zweiten Flansch vorzugsweise formschlüssig verbunden.

Vorteilhafte Ausführungsformen der Erfindung sind in der Zeichnung dargestellt und werden nachfolgend beschrieben.

Dabei zeigen:
- Fig. 1: eine schematische Schnittdarstellung eines Ausschnitts eines Fahrzeugdaches mit einem Ausführungsbeispiel eines erfindungsgemäßen Verstärkungsrahmens für eine Fahrzeugkarosserie, welcher in eine in einem Dach der Fahrzeugkarosserie vorgesehene Öffnung einsetzbar ist,
- Fig. 2: eine perspektivische Darstellung des Verstärkungsrahmens aus Fig. 1 mit zwei miteinander verbundenen Rahmenteilen,
- Fig. 3: eine schematische Schnittdarstellung eines Ausschnitts eines Fahrzeugdaches mit dem Ausführungsbeispiel des erfindungsgemäßen Verstärkungsrahmens für eine Fahrzeugkarosserie aus Fig. 1 in einem ersten Fertigungszustand, und
- Fig. 4: eine schematische Schnittdarstellung eines Ausschnitts eines Fahrzeugdaches mit dem Ausführungsbeispiel des erfindungsgemäßen Verstärkungsrahmens für eine Fahrzeugkarosserie aus Fig. 1 und 2 in einem zweiten Fertigungszustand.

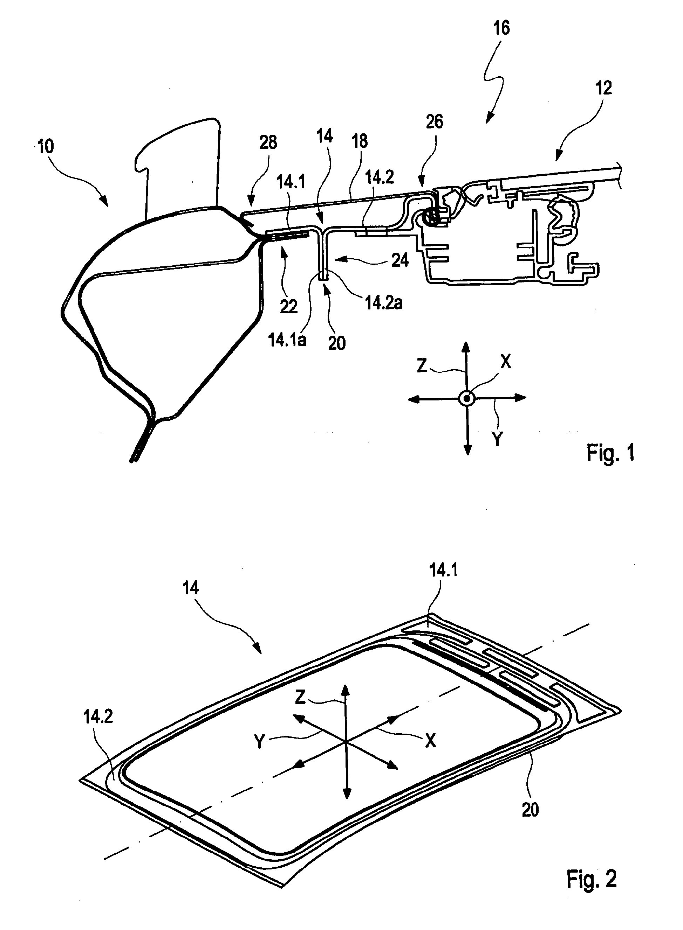

Wie aus Fig. 1 bis 4 ersichtlich ist, umfasst ein dargestelltes Fahrzeugdach 16 einen Dachrahmen 10, ein Dachmodul 12 und einen das Dachmodul 12 aufnehmenden Verstärkungsrahmen 14. Der Verstärkungsrahmen 14 umfasst ein erstes Rahmenteil 14.1 und ein zweites Rahmenteil 14.2 und ist in eine im Fahrzeugdach 16 vorgesehene Öffnung eingesetzt. Zudem ist zwischen dem Dachmodul 12 und dem Dachrahmen 10 eine Dachaußenhaut 18 angeordnet, welche den Verstärkungsrahmen 14 abdeckt.

Im vorliegenden Ausführungsbeispiel handelt es sich bei dem Dachmodul 12 um ein zweiteiliges Bauteil, das vorzugsweise als Schiebedach mit einem Glaselement und einem das Glaselement aufnehmenden Profil ausgeführt ist. Das Profil weist einen umlaufend angeordneten Flansch mit Bohrungen zur Befestigung des Dachmoduls 12 am Verstärkungsrahmen 14 auf. Selbstverständlich sind jedoch auch andere einem Fachmann als sinnvoll erscheinende Varianten des Dachmoduls 12, wie beispielsweise Dachfenster, Panoramadach, Hebedach und Lamellendach denkbar, welche je nach Bedarf aus anderen Werkstoffen hergestellt werden können, wie beispielsweise aus Kunststoff- und/oder Metallwerkstoffen.

Um einen Verstärkungsrahmen 14 für ein Fahrzeug zu schaffen, welcher bei einfacher und kostengünstiger Konstruktion sowie bei Erfüllung der Toleranzanforderungen eine steife Anbindung an eine Dachstruktur bzw. die Karosserie eines Fahrzeugs ermöglicht, bilden erfindungsgemäß das erste Teil 14.1 des Verstärkungsrahmens 14 einen ersten Flansch 14.1a in vertikaler Richtung Z und das zweite Teil 14.2 einen zweiten Flansch 14.2a in vertikaler Richtung Z aus, wobei die beiden Flansche 14.1a, 14.2a miteinander verbunden sind.

Im dargestellten Ausführungsbeispiel ist das erste Rahmenteil 14.1 an einem ersten Fügebereich 22 fest mit der Fahrzeugkarosserie 10 und an einem zweiten Fügebereich 24 fest mit dem zweiten Rahmenteil 14.2 verbunden. Zudem ist das zweite Rahmenteil 14.2 an einem dritten Fügebereich 26 fest mit der Dachaußenhaut 18 verbunden, welche an einem vierten Fügebereich 28 am Dachrahmen 10 anliegt und somit den ersten und zweiten Fügebereich 22, 24 abdeckt. Dadurch kann eine wesentliche Verbesserung der Steifigkeit des Verstärkungsrahmens 14 und damit der Fahrzeugkarosserie erzielt werden. Die Verbindung der Bauteile erfolgt vorzugsweise formschlüssig durch Umformen und/oder stoffschlüssig durch Verschweißen. Hierbei können neben den bereits genannten Verbindungstechniken generell auch andere als sinnvoll erscheinenden zuverlässigen Verbindungstechniken, wie beispielsweise Schraubverbindungen, Klebeverbindungen oder Nietverbindungen bzw. eine Kombination aus verschiedenen Verbindungstechniken eingesetzt werden.

Wie aus Fig. 1 und 2 weiter ersichtlich ist, bildet das erste Rahmenteil 14.1 mit dem zweiten Rahmenteil 14.2 einen umlaufenden Ring 20 aus, an welchen die beiden Rahmenteile 14.1, 14.2 miteinander verbunden sind. Zudem berührt der erste Flansch 14.1a großflächig den zweiten Flansch 14.2a, um bei der Montage des Verstärkungsrahmens 14 einen Toleranzausgleich in vertikaler Richtung Z zu ermöglichen.

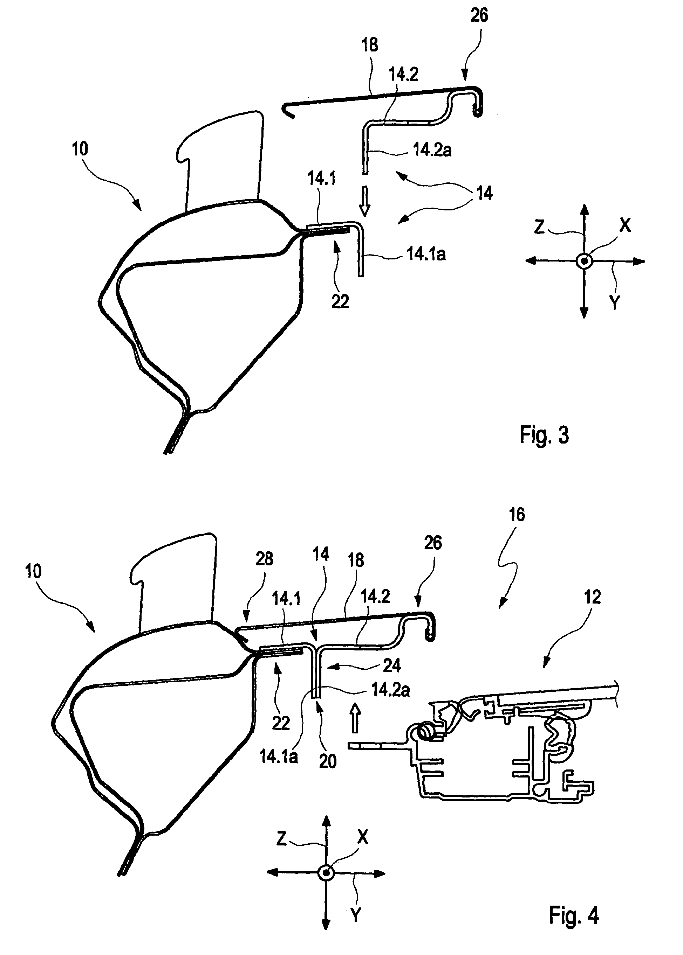

Wie aus Fig. 3 weiter ersichtlich ist, werden beim Anbringen des Verstärkungsrahmens 14 in der Fahrzeugkarosserie zuerst das erste Teil 14.1 des Verstärkungsrahmens 14 mit dem Dachrahmen 10 und das zweite Teil 14.2 des Verstärkungsrahmens 14 mit der Dachaußenhaut 18 verbunden. Anschließend wird das zweite Teil 14.2 des Verstärkungsrahmens 14 mit der Dachaußenhaut 18 und dem zweiten Flansch 14.2a so positioniert, dass die Dachaußenhaut 18 am Dachrahmen 10 und der zweite Flansch 14.2a am ersten Flansch 14.1a anliegen. Zu diesem Zweck wird das zweite Teil 14.2 des Verstärkungsrahmens 14 mit der Dachaußenhaut 18 von über dem ersten Teil 14.1 des Verstärkungsrahmens 14 angeordnet und solange vertikal in Pfeilrichtung abgesenkt, bis die in Fig. 4 dargestellte Position erreicht ist und die Dachaußenhaut 18 am Dachrahmen 10 und der zweite Flansch 14.2a am ersten Flansch 14.1a anliegen. Durch die flächige Überlappung des ersten Flansches 14.1a des ersten Rahmenteils 14.1 und des zweiten Flansches 14.2a des zweiten Rahmenteils 14.2 wird ein Toleranzausgleich in der vertikalen Z-Richtung ermöglicht.

Wie aus Fig. 4 weiter ersichtlich ist, wird dann der erste Flansch 14.1a des ersten Rahmenteils 14.1 vorzugsweise formschlüssig mit dem zweiten Flansch 14.2a des zweiten Rahmenteils 14.2 verbunden. Erst dann wird das Dachmodul 12 von unten eingeführt und über das zweite Rahmenteil 14.2 mit dem Verstärkungsrahmen 14 verbunden. Auch hier können zur Verbindung der Bauteile bereits genannte Verbindungstechniken, wie beispielsweise Schraubverbindungen, Schweißverbindungen, Klebeverbindungen oder Nietverbindungen bzw. eine Kombination aus verschiedenen Verbindungstechniken eingesetzt werden.

### BEZUGSZEICHENLISTE

- 10: Dachrahmen
- 12: Dachmodul
- 14: Verstärkungsrahmen
- 14.1: erstes Rahmenteil
- 14.2: zweites Rahmenteil
- 14.1a: erster Flansch
- 14.2a: zweiter Flansch
- 16: Dach
- 18: Dachaußenhaut
- 20: umlaufender Ring
- 22: erster Fügebereich
- 24: zweiter Fügebereich
- 26: dritter Fügebereich
- 28: vierter Fügebereich
- X: Fahrzeuglängsrichtung
- Y: Fahrzeugquerrichtung
- Z: Fahrzeughochrichtung

## Patentansprüche

1. Verstärkungsrahmen (14) für ein Fahrzeug, der zwischen einem Dachrahmen (10) einer Fahrzeugkarosserie und einem im Dach eingebauten Dachmodul (12) angeordnet ist und der aus mindestens einem ersten Teil (14.1) und einem zweiten Teil (14.2) besteht,
**dadurch gekennzeichnet, dass**
das erste Teil (14.1) einen ersten Flansch (14.1a) in vertikaler Richtung (Z) und das zweite Teil (14.2) einen zweiten Flansch (14.2a) in vertikaler Richtung (Z) ausbilden und die beiden Flansche (14.1a, 14.2a) miteinander verbunden sind, wobei das erste Teil (14.1) fest mit dem Dachrahmen (10) der Fahrzeugkarosserie und das zweite Teil (14.2) mit der Dachaußenhaut (18) verbunden ist.

2. Verstärkungsrahmen (14) nach Anspruch 1, **dadurch gekennzeichnet, dass** der erste Flansch (14.1 a) und der zweite Flansch (14.2a) einen um das Dachmodul (12) umlaufenden Ring (20) bilden.

3. Verstärkungsrahmen (14) nach Anspruch 1 oder 2, **dadurch gekennzeichnet, dass** der erste Flansch (14.1a) großflächig den zweiten Flansch (14.2a) berührt, wodurch bei der Montage des Verstärkungsrahmens (14) ein Toleranzausgleich in vertikaler Richtung (Z) ermöglicht wird.

4. Verstärkungsrahmen (14) nach einem der vorangegangenen Ansprüche, **dadurch gekennzeichnet, dass** die Verbindung zwischen dem ersten Flansch (14.1a) und dem zweiten Flansch (14.2a) formschlüssig ist.

5. Verfahren zum Anbringen eines Verstärkungsrahmens (14) nach einem der vorangegangenen Ansprüche in einer Fahrzeugkarosserie,
**dadurch gekennzeichnet, dass**
zuerst das erste Teil (14.1) mit dem Dachrahmen (10) der Fahrzeugkarosserie und das zweite Teil (14.2) mit der Dachaußenhaut (18) verbunden wird und dann das zweite Teil (14.2) mit der Dachaußenhaut (18) und dem zweiten Flansch (14.2a) so positioniert wird, dass die Dachaußenhaut (18) am Dachrahmen (10)
und der zweite Flansch (14.2a) am ersten Flansch (14.1 a) anliegt, und dann der erste Flansch (14.1a) mit dem zweiten Flansch (14.2a) verbunden wird.

## Claims

1. Reinforcing frame (14) for a vehicle, which is arranged between a roof frame (10) of a vehicle body and a roof module (12) installed in the roof and which consists of at least a first part (14.1) and a second part (14.2),
**characterised in that**
the first part (14.1) forms a first flange (14,1a) in the vertical direction (Z) and the second part (14.2) forms a second flange (14.2a) in the vertical direction (Z) and the two flanges (14.1 a, 14.2a) are connected to one another, the first part (14.1) being fixedly connected to the roof frame (10) of the vehicle body and the second part (14.2) being connected to the outer skin (18) of the roof.

2. Reinforcing frame (14) according to claim 1, **characterised in that** the first flange (14.1 a) and the second flange (14.2a) form a ring (20) surrounding the roof module (12).

3. Reinforcing frame (14) according to claim 1 or 2, **characterised in that** the first flange (14.1 a) contacts the second flange (14.2a) over a large area, thereby enabling equalisation of tolerances in the vertical direction (Z) during the assembly of the reinforcing frame (14).

4. Reinforcing frame (14) according to one of the preceding claims, **characterised in that** the connection between the first flange (14.1a) and the second flange (14.2a) is a positively locking connection.

5. Method for fitting a reinforcing frame (14) according to one of the preceding claims in a vehicle body,
**characterised in that**
first of all the first part (14.1) is connected to the roof frame (10) of the vehicle body and the second part (14.2) is connected to the outer roof skin (18) and then the second part (14.2) with the outer roof skin (18) and the second flange (14.2a) is positioned such that the outer roof skin (18) bears on the roof frame (10) and the second flange (14.2a) bears on the first flange (14.1a), and then the first flange (14.1a) is connected to the second flange (14.2a).

## Revendications

1. Cadre de renfort (14) pour un véhicule, qui est disposé entre un cadre de toit (10) d'une carrosserie de véhicule et un module de toit (12) intégré au toit et qui se compose d'au moins une première partie (14.1) et d'une deuxième partie (14.2),
**caractérisé en ce que**
la première partie (14.1) forme une première bride (14.1a) dans la direction verticale (Z) et la deuxième partie (14.2) forme une deuxième bride (14.2a) dans la direction verticale (Z) et les deux brides (14.1 a, 14.2a) sont reliées ensemble, la première bride (14.1) étant reliée à demeure au cadre de toit (10) de la carrosserie de véhicule et la deuxième partie (14.2) au panneau extérieur de toit (18).

2. Cadre de renfort (14) selon la revendication 1, **caractérisé en ce que** la première bride (14.1a) et la deuxième bride (14.2a) forment une boucle (20) entourant le module de toit (12).

3. Cadre de renfort (14) selon la revendication 1 ou 2, **caractérisé en ce que** la première bride (14.1 a) est en contact avec la deuxième bride (14.2a) sur une grande superficie, moyennant quoi lors du montage du cadre de renfort (14) une compensation des tolérances est rendue possible dans la direction verticale (Z).

4. Cadre de renfort (14) selon l'une des revendications précédentes, **caractérisé en ce que** la liaison entre la première bride (14.1a) et la deuxième bride (14.2a) se fait par complémentarité de formes.

5. Procédé de pose d'un cadre de renfort (14) selon l'une des revendications précédentes dans une carrosserie de véhicule,
**caractérisé en ce que**
tout d'abord la première partie (14.1) est reliée au cadre de toit (10) de la carrosserie de véhicule et la deuxième partie (14.2) est reliée au panneau extérieur de toit (18) et ensuite la deuxième partie (14.2) est positionnée avec le panneau extérieur de toit (18) et la deuxième bride (14.2a) de sorte que le panneau extérieur de toit (18) est en contact avec le cadre de toit (10) et la deuxième bride (14.2a) est en contact avec la première bride (14.1a), et ensuite la première bride (14.1 a) est reliée à la deuxième bride (14.2a).
